**Europäisches Patentamt**

**European Patent Office**

**Office européen des brevets**

(19)

(11) Veröffentlichungsnummer: **0 203 292**
**B1**

(12)

# EUROPÄISCHE PATENTSCHRIFT

(45) Veröffentlichungstag der Patentschrift:
**21.06.89**

(21) Anmeldenummer: **86103768.7**

(22) Anmeldetag: **19.03.86**

(51) Int. Cl.⁴: **C 08 K 5/10,** C 08 L 67/02 //
C08K3/22 ,(C08L67/02, 63:00)

(54) **Verwendung von Tetrabrombisphenol-A-dipropionat zur Herstellung von brandgeschützten und UV-stabilen Polybutylenterephthalat-Formmassen.**

(30) Priorität: **25.05.85 DE 3518973**

(43) Veröffentlichungstag der Anmeldung:
**03.12.86 Patentblatt 86/49**

(45) Bekanntmachung des Hinweises auf die Patenterteilung:
**21.06.89 Patentblatt 89/25**

(84) Benannte Vertragsstaaten:
**BE DE FR GB NL**

(56) Entgegenhaltungen:
FR-A-2 067 093
GB-A-1 418 230
US-A-3 773 715

**Die Akte enthält technische Angaben, die nach dem Eingang der Anmeldung eingereicht wurden und die nicht in dieser Patentschrift enthalten sind.**

(73) Patentinhaber: **Chemische Fabrik Kalk GmbH, Kalker Hauptstrasse 22 Postfach 91 01 57, D-5000 Köln 91 (DE)**

(72) Erfinder: **Kerscher, Utto, Dr., Am Beissel 25, D-5042 Erfstadt 12 (DE)**
Erfinder: **Königstein, Otto, Dr., Alfred Nobel-Strasse 17, D-5000 Köln 90 (DE)**
Erfinder: **Neukirchen, Ernst, Vorsterstrasse 75, D-5000 Köln 91 (DE)**
Erfinder: **Büttgens, Walter, Petersbergstrasse 2, D-5340 Bad Honnef (DE)**

(74) Vertreter: **von Kreisler, Alek, Patentanwälte Von Kreisler- Schönwald- Fues- Keller Selting- Werner Deichmannhaus am Hauptbahnhof, D-5000 Köln 1 (DE)**

**Beschreibung**

Gegenstand der Erfindung ist die Verwendung von Tetrabrombisphenol-A-dipropionat zur Herstellung von brandgeschützten und UV-stabilen Polybutylenterephthalat-Formmassen.

Zur Brandschutzausrüstung von Polybutylenterephthalat werden vornehmlich kernbromierte aromatische Verbindungen, gegebenenfalls in Kombination mit Antimontrioxid verwendet. Besonders bewährt haben sich hierbei als Brandschutzkomponenten bromierte Diphenyläther, wobei Decabromdiphenyläther bevorzugt wird. Ebenso sind kernbromierte Polycarbonate oder Polystyrole, polymeres Tetrabrombisphenol-A-Epoxid oder Äthylen-bis-tetrabromphthalimid als Brandschutzkomponenten für Polybutylenterephthalat bekannt.

In der DE-OS-2 055 504 ist die Herstellung eines Polyestergemisches mit verringerter Brennbarkeit beschrieben, wonach die verringerte Brennbarkeit durch Beimischung von Tetrabrombisphenol-A-diacylat bewirkt wird. Als besonders vorteilhaft wird in dieser DE-OS-2 055 504 die Verwendung des Diacetats des Tetrabrombisphenol A bewertet. Beispiele für höhere Acylreste liegen nicht vor.

Die US-A-3 773 715 beschreibt brandgeschützte lineare Polyesterzusammensetzungen Insbesondere werden lineare Polyester offenbart, die durch Zusätze von gewissen halogenierten aromatischen Estern und gewissen dreifach substituierten Phosphatverbindungen brandgeschützt werden.

Es hat sich gezeigt, daß das Tetrabrombisphenol-A-diacetat mit einem Schmelzpunkt von 172 - 175°C bei der Einarbeitung in Polybutylenterephthalat bei einer Temperatur von 240°C zu verfärbten Produkten führt, die zwar den geforderten Brandtest-Normen entsprechen, aber nicht mehr den Anforderungen bezüglich einer UV-Stabilität bzw. Migrationsfestigkeit.

Als Konstruktionswerkstoff im Elektro- und Computerbereich, z. B. für Computergehäuse, wird vornehmlich glasfaserverstärktes Polybutylenterephthalat mit einem Glasfaseranteil von etwa 10 - 50 % verwendet. Für die genannten Anwendungsbereiche muß das Kunststoffmaterial brandsicher sein, d. h. es muß den Anforderungen nach Underwriters' Laboratories-Brandtest UL 94 der Klasse VO bzw. V1 entsprechen. Außerdem sollen die eingebauten Brandschutzkomponenten keine Verminderung der mechanischen und physikalischen Eigenschaften bewirken. Es wird gefordert, daß keine Migration der Brandschutzkomponenten auftritt, wodurch die glasfaserverstärkten Kunststoffe mit einem störenden Belag überzogen werden könnten. Ferner darf bei der Verarbeitung der brandgeschützt ausgerüsteten Polybutylenterephthalat-Formmassen in Temperaturbereichen von etwa 260°C keine Verfärbung auftreten. Ebenso darf durch Lichteinwirkung keine Verfärbung auftreten. Die Brandschutzkomponente muß also UV-Stabilität gewährleisten. In der Praxis hat es sich immer wieder gezeigt, daß die zur Brandschutzausrüstung von Polybutylenterephthalat verwendeten Brandschutzmittel keine ausreichende UV-Stabilität haben, um helle, bei Lichteinwirkung nicht vergilbende Polybutylenterephthalat-Produkte herstellen zu können.

Somit stellt sich die Aufgabe, ein farbloses, UV-stabiles, bromhaltiges Brandschutzmittel zu finden, das, in Polybutylenterephthalat-Formmassen eingearbeitet, auch bei hoher Temperaturbelastung keine Migration bzw. Oberflächenbelag zeigt und keine Veränderung der mechanischen und physikalischen Eigenschaften des Kunststoffmaterials bewirkt.

Es wurde jetzt gefunden, daß Tetrabrombisphenol-A-dipropionat geeignet ist, diese Aufgabe zu lösen.

Gegenstand der Erfindung ist die Verwendung von Tetrabrombisphenol-A-dipropionat in Mengen von bis zu 30 Gew.-%, vorzugsweise 10 - 16 Gew.-%, zusammen mit 4 - 10 Gew.-% Antimontrioxid, bezogen auf die Kunststoffmasse, zur Herstellung von brandgeschützten und UV-stabilen Polybutylenterephthalat-Formmassen.

Vorzugsweise wird Tetrabrombisphenol-A-dipropionat zusammen mit Polyepoxidverbindungen verwendet. Das vorzugsweise eingesetzte polymere Bisphenol-A-epoxid hat ein Epoxid-Äquivalentgewicht bei 180 bis 1000, vorzugsweise 600 bis 850. Diese Polyepoxidverbindungen werden vorzugsweise in Mengen bis zu 5 Gew.-% zu dem Tetrabrombisphenol-A-dipropionat zugesetzt. In einer weiteren bevorzugten Ausführungsform der Erfindung sind die unter Verwendung von Tetrabrombisphenol-A-dipropionat bereitgestellten Formmassen durch Glasfasern verstärkt.

Tetrabrombisphenol-A-dipropionat kann hergestellt werden beispielsweise durch Umsetzung von Tetrabrombisphenol A mit Propionsäuresanhydrid in Propionsäure als Reaktionsmedium. Es ist ein farbloses kristallines Produkt mit einem Schmelzpunkt von 105 - 111°C und einem Bromgehalt von 48,0 - 48,8 %.

Durch die Kombination von Tetrabrombisphenol-A-dipropionat mit einer geringen Menge an Polyepoxidverbindung treten bei Verarbeitungstemperaturen von 140°C keine Verfärbungen der Kunststoff-Formmassen auf. Bei einer Dauerbelastung von 100 Stunden bei einer Temperatur von 240°C zeigt sich keinerlei Migration der eingearbeiteten Brandschutzkomponente. Die mit Tetrabrombisphenol-A-dipropionat ausgerüsteten Polybutylen-terephthalat-Formkörper entsprechen der Brandschut-Norm nach Underwriters' Laboratories UL 94, Klasse VO. Ihre mechanischen und physikalischen Eingenschaften bleiben unverändert im Vergleich zu reinem Kunststoff. Durch dauerhafte UV-Bestrahlung kann keinerlei Verfärbung festgestellt werden.

Es hat sich gezeigt, daß beim Einsatz anderer als Brandschutzmittel für Polybutylenterephthalat bekannter Bromverbindungen und synergistisch wirkenden Antimonverbindungen bei einem Verhältnis von 2 Teilen Bromverbindung und mehr als 1 Teil Antimonverbindung ein antagonistischer Effekt auftritt. Entsprechend der vorliegenden Erfindung kann jedoch die mitverwendete Menge Antimontrioxid unter gleichzeitiger Verminderung des in Kombination mit einer Polyepoxidverbindung eingesetzten Tetrabrombisphenol-A-dipropionats so weit erhöht werden, bis ein Verhältnis Antimontrioxid : Tetrabrombisphenol-A-dipropionat von 1,4 : 2 vorliegt, ohne daß die in erfindungsgemäßer Weise bewirkten Eigenschaften der Kunststoff-Formmassen verändert werden.

Mit den nachfolgenden Beispielen wird die erfindungsgemäße Brandschutzkombination, insbesondere für glasfaserverstärktes Polybutylenterephthalat erläutert.

**Beispiel 1** (Vergleich, ohne Brandschutz)

Polybutylenterephthalat mit 30 % Glasfaserfüllung (PBTP-GF 30) wird nach dem Vortrocknen bei 90°C über einen Einschnecken-Laborextruder bei einer Temperatur von 260°C extrudiert und granuliert. Das erhaltene Granulat wird auf einer Spritzgußmaschine bei 240 - 250°C zu Normprüfkörpern verspritzt.

**Beispiel 2** (erfindungsgemäß)

820 Gewichtsteile (GT) vorgetrocknetes PBTP-GF 30 werden in einem Pflugbettmischer mit 110 GT Tetrabrombisphenol-A-dipropionat und 70 GT Antimontrioxid homogen gemischt. Die Mischung wird analog dem Beispiel 1 extrudiert, granuliert und bei 240 - 250°C zu Normprüfkörpern verspritzt.

**Beispiel 3** (erfindungsgemäß)

820 GT vorgetrocknetes PBTP-GF 30 werden mit einem Gemisch aus 107 GT Tetrabrombisphenol-A-dipropionat und 3 GT Polyepoxidverbindung mit einem Epoxidäquivalentgewicht von etwa 850 und 70 GT Antimontrioxid vermischt. Die Mischung wird analog dem Beispiel 1 extrudiert, granuliert und bei 240 - 250°C zu Normprüfkörpern verspritzt.

**Beispiel 4** (Vergleich)

820 GT vorgetrocknetes PBTP-GF 30 werden mit 110 GT Tetrabrombisphenol-A-diacetat und 70 GT Antimontrioxid vermischt und analog dem Beispiel 1 extrudiert, granuliert und bei 240 - 250°C zu Normprüfkörpern verspritzt.

**Beispiel 5** (Vergleich)

860 GT vorgetrocknetes PBTP-GF 30 werden mit 100 GT Decabromdiphenyläther und 40 GT Antimontrioxid vermischt und analog den vorangegangenen Beispielen extrudiert, granuliert und bei 240 - 250°C zu Normprüfkörpern verspritzt.

Die entsprechend den Beispielen 1 bis 5 erhaltenen Normprüfkörpern wurden nach Klimatisierung bei 23°C/65 % rel. Feuchte folgenden Prüftests unterzogen:

1. Brandverhalten nach Underwriters' Laboratories UL 94
2. Schlagzähigkeit nach DIN 53453
3. Reißfestigkeit nach DIN 53455
4. Reißdehnung nach DIN 53455
5. Migration bei 140°C/100 Stunden
6. UV-Test (Suntester)

Die Prüfergebnisse sind in nachfolgender Tabelle zusammengefaßt.

**Patentansprüche**

1. Verwendung von Tetrabrombisphenol-A-dipropionat in Mengen von bis zu 30 Gew.-%, zusammen mit 4 bis 10 Gew.-% Antimontrioxid, bezogen auf die Kunststoffmasse, zur Herstellung von brandgeschützten, UV-stabilen und migrationsstabilen Polybutylenterephthalat-Formmassen.

2. Verwendung von Tetrabrombisphenol-A-dipropionat nach Anspruch 1, dadurch gekennzeichnet, daß selbiges in Mengen von 10 - 16 Gew.-% bezogen auf die Kunstoffmasse verwendet wird.

3. Verwendung von Tetrabrombisphenol-A-dipropionat nach Anspruch 1, oder 2 dadurch gekennzeichnet, daß es zusammen mit Polyepoxidverbindungen verwendet wird.

4. Verwendung von Tetrabrombisphenol-A-dipropionat nach Anspruch 3, dadurch gekennzeichnet, daß als Polyepoxidverbindung polymeres Bisphenol-A-Epoxid mit einem Epoxidäquivalentgewicht von 180 - 1 000, verwendet wird.

5. Verwendung von Tetrabrombisphenol-A-dipropionat nach Anspruch 4 dadurch gekennzeichnet, daß als Polyepoxidverbindung polymeres Bisphenol-A-Epoxid mit einem Epoxidäquivalentgewicht von 600 - 850, verwendet wird.

6. Verwendung von Tetrabrombisphenol-A-dipropionat nach Ansprüchen 3 bis 5, dadurch gekennzeichnet, daß dem Tetrabrombisphenol-A-dipropionat bis zu 5 Gew.-% der Polyepoxidverbindung zugesetzt werden

7. Verwendung von Tetrabrombisphenol-A-dipropionat nach Ansprüchen 1 bis 6, dadurch gekennzeichnet, daß die Formmassen durch Glasfasern verstärkt sind.

**Tabelle 1**

| Test | Beispiel | | | | |
|------|------|------|------|------|------|
| | 1 | 2 | 3 | 4 | 5 |
| Brandtest UL 94 1,6 mm | HB | VO | VO | VO | VO |
| Schlagzähigkeit DIN 53453 KJ/m$^2$ | 27 | 22 | 26 | 16 | 23 |
| Reißfestigkeit DIN 53455 N/mm$^2$ | 110 | 105 | 110 | 80 | 105 |
| Reißdehnung DIN 53455 m/m | 0,022 | 0,019 | 0,022 | 0,008 | 0,020 |
| Migration Gew.-verlust % (bez. auf einges. Brandschutzmittel) | - | 1,5 | 1,5 | 6,0 | 2,8 |
| Belag bei Migration | nein | nein | nein | ja | ja |
| UV-Suntest | pos. | pos. | pos. | neg. | neg. |

**Claims**

1. Use of tetrabromobisphenol A dipropionate in amounts of from up to 30 % by weight in combination with from 4 to 10 % by weight of antimony trioxide, based on the synthetic material composition, for the production of flame-protected, UV-stable and migration-stable polybutylene terephthalate molding compositions.

2. Use of tetrabromobisphenol A dipropionate according to claim 1, characterized in that same is used in amounts of from 10 to 16 % by weight, based on the synthetic material composition.

3. Use of tetrabromobisphenol A dipropionate according to claims 1 or 2, characterized in that the substance is used together with polyepoxide compounds.

4. Use of tetrabromobisphenol A dipropionate according to claim 3, characterized in that as the polyepoxy compound there is used a polymeric bisphenol A epoxide having an epoxide equivalent weight from 180 to 1,000.

5. Use of tetrabromobisphenol A dipropionate according to claim 4, characterized in that as the polyepoxy compound there is used a polymeric bisphenol A epoxide having an epoxide equivalent weight from 600 to 850.

6. Use of tetrabromobisphenol A dipropionate according to claims 3 to 5, characterized in that up to 5 % by weight of the polyepoxy compound are added to the tetrabromobisphenol A dipropionate.

7. Use of tetrabromobisphenol A dipropionate according to claims 1 to 6, characterized in that the molding compositions have been reinforced with glass fibers.

**Revendications**

1. Utilisation de dipropionate de tétrabromobisphénol-A en quantités pouvant atteindre 30 % en poids ainsi que de 4 à 10 % en poids de trioxyde d'antimoine par rapport à la masse de matière plastique, pour la production de produits moulés en polytéréphtalate de butylène ignifugés, stables aux U. V et stables aux migrations.

2. Utilisation de dipropionate de tétrabromobisphénol-A selon la revendication 1, caractérisée en ce que ce dernier est employé en quantités de 10 à 16 % en poids par rapport à la masse de matière plastique.

4

EP 0 203 292 B1

3. Utilisation de dipropionate de tétrabromobisphénol-A selon la revendication 1 ou 2, caractérisée en ce qu'il est employé avec des composés polyépoxydes.

4. Utilisation de dipropionate de tétrabromobisphénol-A selon la revendication 3, caractérisée en ce qu'on emploie, comme composé polyépoxyde, de l'époxyde de Bisphénol-A avec un poids équivalent en époxyde de 180 à 1 000.

5. Utilisation de dipropionate de tétrabromobisphénol-A selon la revendication 4, caractérisée en ce qu'on emploie, comme composé polyépoxyde, un époxyde de bisphénol-A polymérisé avec un poids équivalent en époxyde de 600 à 850.

6. Utilisation de dipropionate de tétrabromobisphénol-A selon les revendications 3 à 5, caractérisée en ce qu'on ajoute au dipropionate de tétrabromobisphénol-A jusqu'à 5 % en poids du composé polyépoxyde.

7. Utilisation de dipropionate de tétrabromobisphénol-A selon les revendications 1 à 6, caractérisée en ce que les produits moulés sont renforcés par des fibres de verre.